# EUROPEAN PATENT APPLICATION

(11) **EP 2 081 171 A1**
(43) Date of publication of application: **22.07.2009**
(21) Application number: 08100513.4
(22) Date of filing: 15.01.2008
(51) Int. Cl.: G09F 3/04, B32B 5/18, B32B 7/02

(54) **Insulating label and method for manufacturing such label.**

(71) Applicant: Inbev S.A., 3000 Leuven (BE)
(72) Inventor: Franssen, Stijn, 3001 Heverlee (BE); Van Pottelbergh, Eric, 3450 Geetbets (BE)
(74) Representative: Gevers, François

(57) **Abstract**

An insulating label comprising at least a layer a) of shrinkable and/or stretchable material and a further layer b) of insulating material; the layer a) exceeding at least one of the edges (4) of the layer b) in a longitudinal direction of the label (1), **characterized in that** the layers are mutually bound prior to application of the label (1) on a container.

## Description

### Field of the Invention

The present invention concerns an insulating label and a method for manufacturing such a label.

### Background of the Invention

Habits of consumers are more and more focussed on consumption of cold beverages such as water, milk, lemonades, beers and other convenient drinks. On the one hand the cold liquid creates a refreshing sensation when the liquid is in direct contact with the mouth and after the ingestion of it. On the other hand during the consumption of the product in its original packaging container, the sensation provided by the contact between the hand of the consumer and the packaging is less pleasant (cold sensation, condensation effect, etc). Another disadvantage of having a direct contact between the container itself and the hand of the consumer, is a gradual warming up of the liquid itself created by the diffusion from the body heat to the container (difference of about 35 °C). Moreover, the temperature of the environment where the consumer is drinking the cold beverage, increases gradually the temperature of the beverage before and during its consumption. Having a thermally isolated container provides therefore the advantages to maintain the liquid colder longer, associated with a pleasant sensation in the hand.

Different technical possibilities do exist to thermally insulate a container, but one of the most attractive ones is to use thermally insulating material that can be used and combined together with the label.

The combinations of thermally insulating materials with films have already been used for the packaging of beverages. US 6620281 discloses a label comprising an adhesive backed strip. The strip is divided in two adjacent sections, the first section being back covered with an insulating foam material, while the second section is free of foam material. According to US 6620281 the label is applied around a can by wrapping the strip around the can and by adhering the second section over the opposite free end portion of the first section by means of said adhesive.

A drawback associated with this type of strip is that its application to a container requires very high tension in order to obtain that the label is smoothly applied around the container. Another drawback is that the adhesive and the strip material have to be selected very carefully since due to the high tension required to apply the label, a high stress will be applied on the overlapping edges of the label, which may result in a loss of tightness of the label around the container. Such loss of tightness results in a loss of insulating efficiency and is aesthetically unacceptable.

Evidently, the above selection of materials seriously limits the freedom of configuration of the label and requires highly controlled and expensive processing.

More recently the high tension needed to apply the label has been rendered redundant by using a shrink layer for the application thereof. WO 2006/086333 discloses a prelabel comprising an insulating layer and a first shrink layer that upon application on a container faces the containers outer surface. This prelabel is then wrapped around the container and subjected to a first heat treatment, such that the prelabel firmly fits around the container.

Upon application of the prelabel, a second shrink layer is applied around the insulating layer and subjected to a heat treatment, such that the second label shrinks and the resulting label smoothly and firmly sets around the container.

A drawback of the above prior art label is that the label needs to be applied in a 2-step method which is economically less preferred due to significant costs associated with extra logistics and handling. Moreover, the labelling process is more complicated and requires more equipment that limits the overall productivity of the packaging line.

### Summary of the present Invention

The present invention is directed to an insulating label comprising at least a layer a) of shrinkable and/or stretchable material and a further layer b) of insulating material; the layer a) exceeding at least one of the edges of the layer b) in a longitudinal direction of the label, characterized in that the layers are mutually bound prior to application of the label on a container.

The present invention also concerns a web comprising several insulating labels as defined here above, as well as a method for manufacturing such web, the method comprising providing a shrink layer or stretch layer; adhering a layer of thermally insulating material thereon; optionally removing part of the thermally insulating material so as to create discrete patches on the shrink layer or stretch layer.

### Detailed description of the present Invention

An insulating label comprising at least a layer a) of shrinkable and/or stretchable material and a further layer b) of insulating material; the layer a) exceeding at least one of the edges of the layer b) in a longitudinal direction of the label, characterized in that the layers are mutually bound prior to application of the label on a container, has the advantage that it can be applied to the container in an efficient, low cost 1-step process, resulting in a firmly fixed label having a smooth surface.

Another advantage is that due to the fact that the shrinking layer and/or stretching layer of the present invention exceeds at least one of the edges of the insulating layer in a longitudinal direction of the label, the layer can be wrapped around a can without the opposite ends of the insulating layer overlapping each other. This is particularly important for obtaining a smooth label and also has benefits towards further handling of labelled containers. Indeed, when the opposite ends of the insulating layer overlap, a ridge is created that is aesthetically unfavourable and that can limit the rolling of round containers.

Preferably, the shrink layer and/or the stretch layer is situated at the exposable side of the label. This offers the additional advantage that the insulating layer is protected against water ingress, thereby preventing loss of insulating properties.

Additionally, the shrink layer and/or stretch layer preferably exceeds the edges of the insulating layer in a transverse direction of the layer. This characteristic offers the advantage that when the label is applied on a container, the exceeding edges, upon shrinking seal the edges of the label against water ingress, such that no water can contact the insulating layer from the transverse edges of the label.

The insulating material preferably has a thermal conductivity in the range of 0,0015 to 0,25 W/m*K and has a thickness of at least 0,1 mm. It is believed that when the insulating layer meets these requirements, the sensation of cold when holding a container with cooled beverage is prevented and that the insulating capacities are sufficient to maintain the contained beverage cool for a period sufficiency long to allow consumption.

Preferably, the layer of insulating material comprises closed cell foam.

### Brief Description of the Figures

In order to better describe the characteristics of the present invention, the following embodiments of an insulating label according to the invention and of a method for manufacturing thereof will be described as an example only, without being limitative in any way and with reference to the appended drawings, wherein:
**Figure 1** schematically represents an overview of a web comprising labels according to the present invention;
**Figure 2** schematically represents different possible configurations of labels in a web;
**Figure 3** schematically represents a production process of a web comprising labels;
**Figure 4** schematically represents an alternative production process of a web;

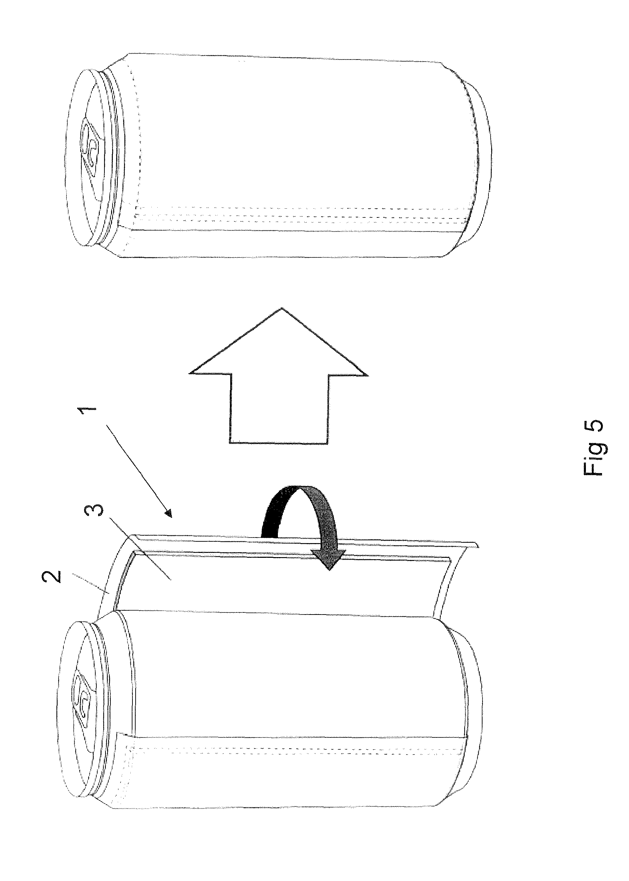

**Figure 5** schematically represents an application of a label according to the present invention;
**Figure 6** schematically represents an alternative embodiment of a label according the invention;
**Figure 7** schematically represents several applications of a label according the invention;
**Figure 8** schematically represents an alternative production process of a web of labels according the present invention.

### Detailed description of Preferred Embodiments

The present invention concerns an insulating label 1, comprising at least a layer 2 of shrinkable and/or stretchable material and a further layer 3 of insulating material applied thereon.

Layers of shrinkable materials have the property to retract when they are exposed to a sufficient amount of heat. This retraction is material specific and can occur in two different directions, the machine direction and/or the cross direction. In a preferred embodiment, typical materials to be used for the shrink layer are all the major machine direction oriented (MDO) films based on different polymer materials such as OPS (oriented polystyrene), PVC (polyvinyl chloride), PET (polyethylene tereftalate), polyolefins etc. A typical thickness for this kind of layers is between 25 µm and 125 µm and generally about 50 µm. These layers have as main property to only shrink in one direction namely the machine direction of the film; shrink % can go up to 70% in machine direction. It is also included in this invention that the used shrink film has also unique property to only shrink in the cross direction of the film. Typical suppliers for printed shrink layers/sleeves ready for labelling are AET, CCL Label, MRI Flexible Packaging, Finpac etc.

Layers of stretchable material have the property to substantially elongate when they are exposed to a sufficient amount of tension but retract to their original state when the applied tension is released. This elongation and retraction behaviour is material specific and can occur in two different directions, the machine direction and/or the cross direction. Typical suppliers for printed stretch layers/sleeves ready for labelling are CCL Label, MRI Flexible Packaging, Finpac etc.

Typical materials to be used for the thermally insulating layer are different kinds of thermally insulating material having a thermal conductivity in the range of 0.0015 to 0.25 W/m*K and a thickness of at least 0.1 mm. The thermally insulating material can be advantageously selected from the group consisting of fiberfill batt, melt blown fibers, knit fabrics, woven material, fleece, foams, extrudable and coatable compounds. In this invention, the extrudable and coatable compounds can advantageously be treated to create a foam (hereinafter referred to as foamable compounds). A typical thickness for this kind of thermally insulating material can go up to 1 mm or higher.

On a preferred embodiment, foamable compounds are preferably selected from the group having the possibility of producing a closed cell foam, such as PE (polyethylene)-based polymers. This type of closed cell foam is particularly advantageous in this invention and provides water-resistant properties to the thermally insulating layer, so that it maintains its thermally insulating property even when in contact with water.

Closed cell foam will be the preferred thermally insulating material to be used when the label is applied on a container that is to pasteurized after labelling. Another advantage of closed cell foam is that the thickness and its insulating properties are less depending on shrink tension exerted by the shrink layer 2 compared to other thermally insulating materials.

Since using alternatively structured materials such as closed cell foam which are by definition less compressible as fibrefill batt, and where the volume of air content during compression remains quite stable, the thermally insulating performance of the solution presented in this invention is much less depending on production variations during shrinking operation or alternative adhesive based fastening techniques (e.g. self-adhesive or glueing). Moreover, the preferred insulating material described in this invention is (presently) relatively cheap compared to other prior art thermally insulating materials.

Especially some types of fibre based thermally insulating materials are relatively expensive. The alternative materials presented in this invention have been validated on their at least equal thermally insulating performances, and are specific materials such as PE-foam or similar. Those materials, mainly used as protective packaging materials, have a price level which (at present) is a fraction of other more sophisticated thermally insulating materials.

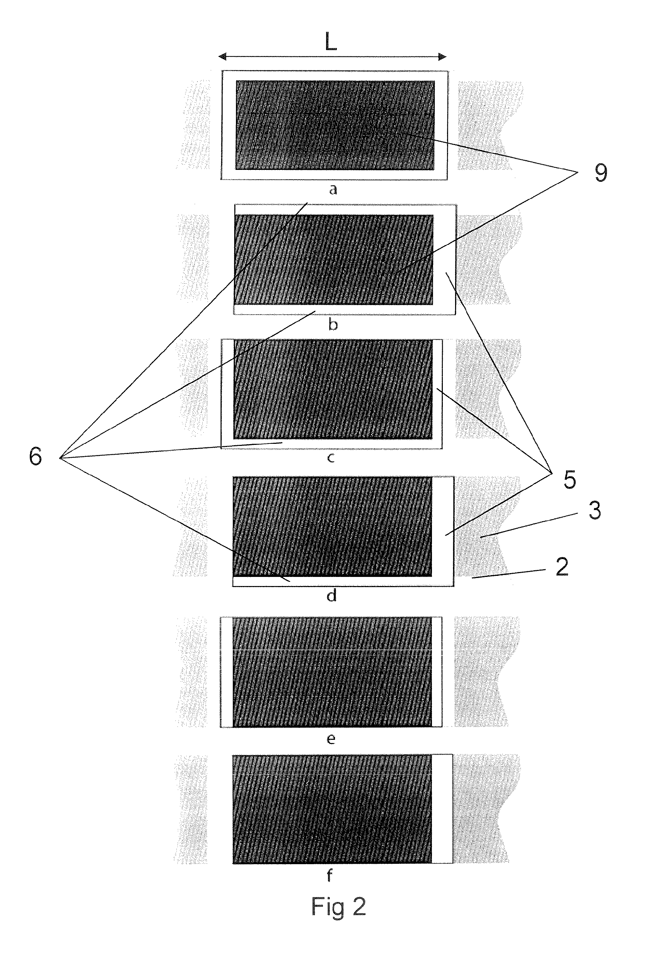

According to the invention, and as represented in figure 2, the shrink layer and or stretch layer 2 exceeds at least one of the edges 4 of the insulating layer 3 in a longitudinal direction L of the label 1, leaving at least a strip 5 of the shrink layer and/or stretch layer 2 free of insulating material 3 (figures 2b, 2d and 2f). Clearly the shrink layer and/or stretch layer 2 can exceed both transverse edges 4 of the insulating layer 3, leaving two strips 5 of the shrink layer and/or stretch layer 2 free of insulating material (figures 2a, 2c and 2e). In a preferred embodiment, the shrink and or stretch layer 2 exceeds at least one of the edges 4 of the insulating layer of a length of at least 3 mm, i.e. the corresponding strip has a width of at least 3 mm measured in a longitudinal direction L of the label 1.

According to a preferred embodiment (figures 2b, 2c and 2d) the shrink layer and/or stretch layer 2 also exceeds the insulating layer 3 in a transversal direction of the label 1, resulting in at least one lateral strip 6 of the shrink layer and/or stretch layer to be free of insulating material.

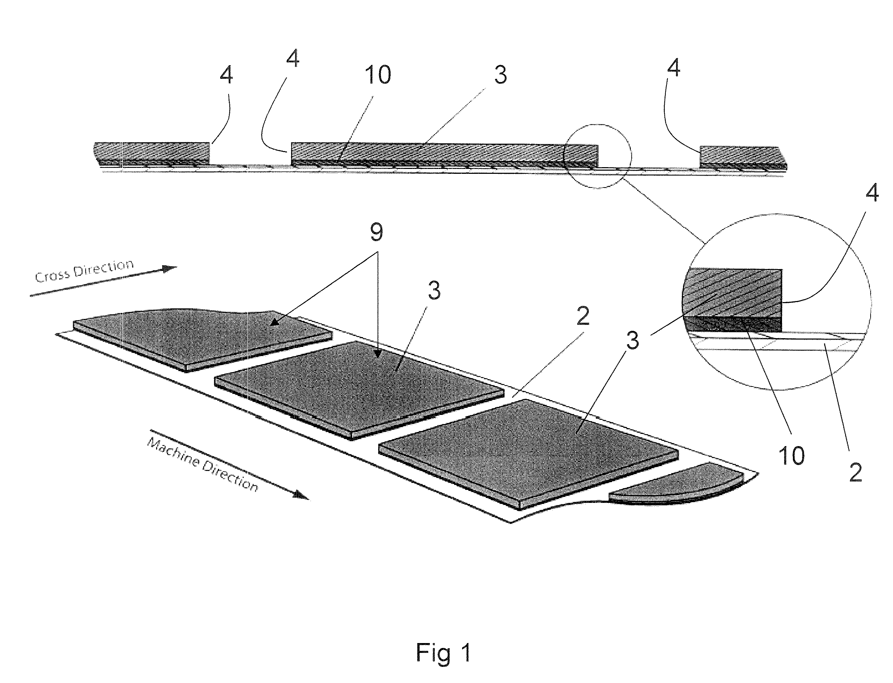

The label according to the invention can be manufactured in a cost effective manner by producing a so-called single-lane web 7 of labels as represented in figure 1. This single-lane web 7 comprises a continuous film 8 of shrinkable material and/or stretchable material 2 with discrete patches 9 of insulating material provided thereon. In the represented embodiments, each of these patches 9 corresponds to the insulating layer 3 of a single label 1. It is clear that by cutting the single-lane web in a regular pattern between two adjacent patches 9 results in individual labels 1 according to the invention.

### Method for manufacturing of the single-lane web

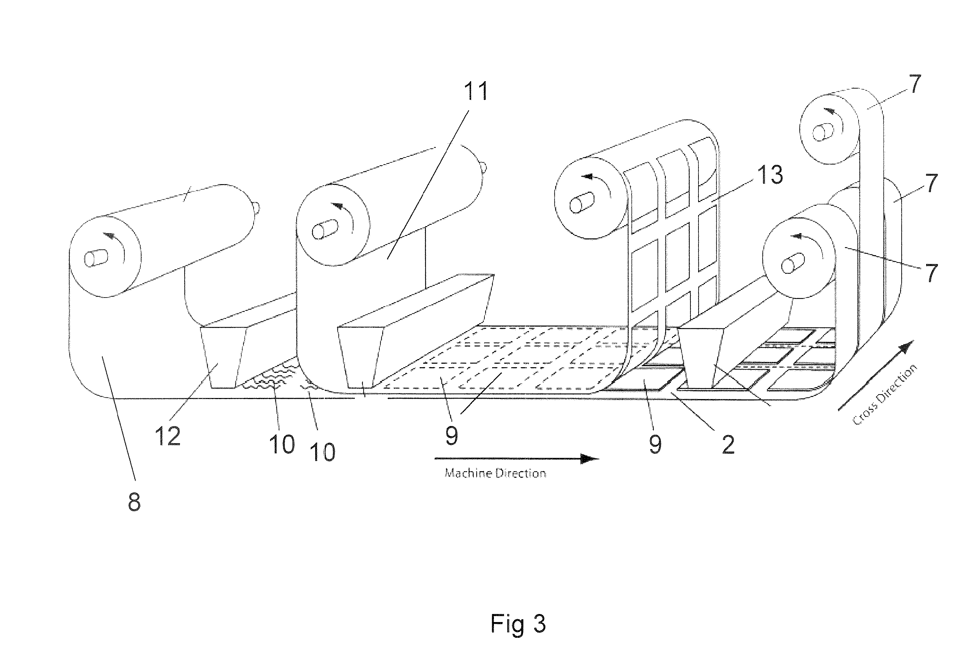

Figure 3 represents a method for manufacturing a single-lane web 7, the method comprising the steps of:
- step 1: unwinding film 8 of shrinkable material and/or stretchable material;
- step 2: partial application of an adhesive substance 10, on areas with the same contours as the one of the patches 9 of thermally insulating material to be provided on the film 8;
- step 3: overall lamination of a continuous film 11 of thermally insulating material onto the partially adhesive coated film 8;
- step 4: kiss-cutting the resulting laminate so that only the film 11 of thermally insulating material is being cut;
- step 5: stripping away part of the film 11 of thermally insulating material surrounding the glue adhered patches 9 to obtain a web of labels;
- step 6: slitting/rewinding of the web of labels into different single-lane webs 7.

Step 1 comprises unwinding the film 8 of shrinkable material and/or stretchable material and exposing the area to be adhesive coated to an adhesive transfer mechanism 12. This mechanism 12 (roller coating, die-coating, screen coating etc.) is then partially applying adhesive areas onto the film 8 during step 2. The size of those adhesive areas is designed in relation to the dimensions of the thermally insulating material patches 8 desired in the label 1. In step 3, the film 11 of insulating material is also unwound and laminated onto the partially adhesive coated film 8. The result of this last production step is a laminate wherein both films 8 and 11 adhere to each other except in the non-adhesive coated areas. By means of the technique of kiss-cutting in step 4 (i.e. cutting through the film 11 of insulating material and not through the base film 8), part of the film 11 of insulating material is cut, in particular that part 13 that surrounds the matrix of patches 9 of insulating material. In step 5, the surrounding part 13 is separated and removed, whereby the remaining film 8 and patches 9 form a multi-lane web. The technique of kiss-cutting of this invention includes the traditional diecutting technology as well as more advanced methods such as lasercutting, ultrasonic cutting etc. The final result of these above in-line production steps is a continuous multi-lane web comprising multiple lanes of discrete patches 9 of insulating material adhered to the film 11.

Since for the purpose of labelling operations, the continuous web preferably does not contain more than one lane of patches 9, the multi-lane web is slit during step 6 into different single-lane webs 7. This last production step 6 can be accomplished either in-line with the preceding production steps 1 to 5 or either off-line in a separate operation.

In a preferred embodiment, the film 8 of shrinkable material and/or stretchable material that is used following the described method is a non-adhesive film. When the non-adhesive film is a film of shrinkable material, the glue that is used to adhere the patch to the film can be regular hotmelt glue but is preferably a UV-curing glue. This last type of glue is preferred since it avoids the film 8 to shrink due to the application of the UV-curing glue. Most of traditional glues such as hotmelt or even wet glue in combination with heat drying will cause the underlying film 8 to shrink already during the web preparation phase. To avoid the premature shrinking process due to the application of regular glue an intense cooling system can be applied during this application.

Typically these production steps can be carried out on any narrow-web label printing press (Gallus, GiDue, Nilpeter, ...) and preferably (due to material thickness and associated short roll length) in combination with an automatic roll change system (e.g. Vectra Systems from AB Graphic International).

The above described method can be extended to a more technically advanced method for the manufacturing of the single-lane continuous web (also called the single-lane web) by the application of an extrudable/coatable and/or foamable compounds. More specifically in this advanced method the thermally insulating material is dispensed onto the non-adhesive film 8 of shrinkable material and/or stretchable material in order to form "in situ" the thermally insulating patches 9 of the web. To create the repetitive pattern of the thermally insulating patch, the dispensing process would therefore need to be intermittent. When the film 8 is a film of shrinkable material, an intense cooling operation might be required, anticipating on the potential high temperatures of the dispensing, foaming, drying and/or curing processes, thereby avoiding the film to already shrink during these processes instead of shrinking onto a container.

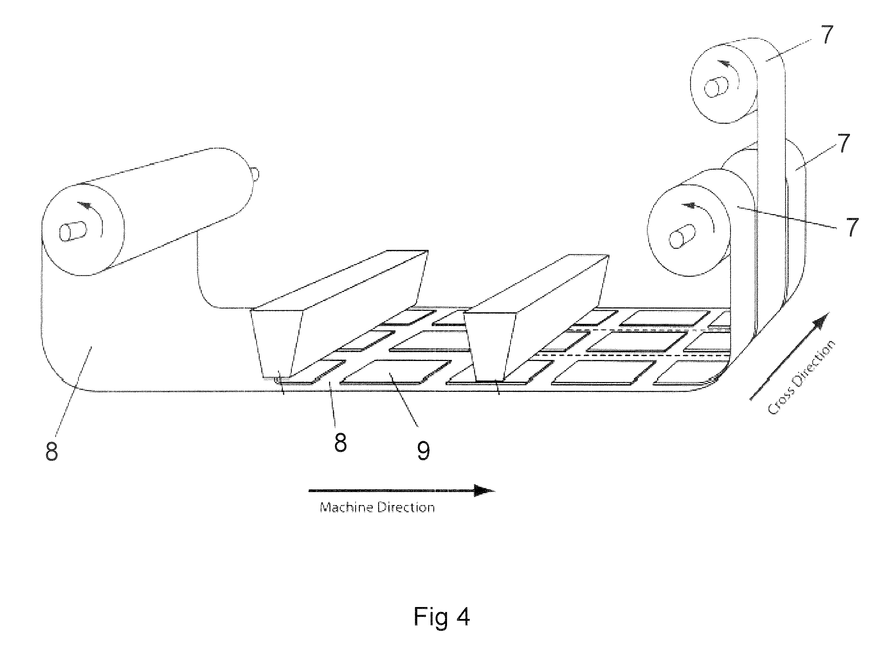

Figure 4 shows a production method, comprising a simplification of the earlier described method of Figure 3, wherein steps 2 and 3 are being replaced by directly dispensing patches 9 of thermally insulating material in a defined pattern, thereby adhering directly onto the film 8, and wherein steps 4 and 5 are omitted. This alternative production method can be summarised as follows:
- step 1b: unwinding film of shrinkable material and/or stretchable material;
- step 2b: Partial and intermittent dispensing of extrudable and/or foamable compounds onto one surface of the film 8 (replacing step 2 and 3) thereby obtaining a multi-lane web;
- step 3b: slitting/rewinding of the multi-lane web into different single-lane webs 7.

In step 1b, same as in step 1 of the original methods of Figure 3, of method as illustrated in Figure 4 the film 8 of shrinkable material and/or stretchable material is unwound. No adhesive substance is being deposited but by means of an intermittent extrusion or coating mechanism (e.g. slot die, roller coating, screen coating, etc.), defined patches 9 of thermally insulating material. This material can be an extrudable and/or foamable compound providing sufficient thermally insulating performance.

Some typical examples of technologies and substances to be used for intermittent dispensing of the thermally insulating patches are the following:
- Intermittent extrusion of a polyolefin or any other extrudable compound whereby - optionally - by means of gas injection or mixing in chemical foaming agents (possibly in combination with heating), a certain degree of foaming of the extruded layer is being obtained. Typical examples are polyethylene foams obtained by extrusion in combination with isobutane gas injection, polystyrene foams obtained by extrusion in combination with mixing in citric acid or citric acid salts.
- Intermittent coating of a hotmelt, solvent or water based adhesive or any other coatable compound whereby - optionally - by means of gas injection/mixing or mixing in chemical foaming agents (possibly in combination with heating), a certain degree of foaming of the coated layer is being obtained. Typical examples are acrylic or vinyl acetate copolymer coatings optionally mixed with hydrocarbon encapsulated microspheres.

In all cases, the thermally insulating properties of the intermittently dispensed patch are an inherent property of the dispensed material itself and/or of the combination with the optionally obtained foaming of the material. The dimension of the thermally insulating patches 9 is being determined by the way of dispensing of the extrusion or coating mechanism in combination with its intermittent properties.

The final result of this operation is a multi-lane web with multiple lanes of patches 9 of insulated material adhered to the film 8 of shrinkable material and/or stretchable material in a repetitive pattern. As described with respect to the method represented in figure 3, single-lane webs 7 can be obtained by slitting the multiple-lane web.

The web can optionally be decorated during the manufacturing of the web, by printing either the patch 9 or the film 8 itself. The end result of the preparation process following this invention is a single-lane continuous web containing several thousands of single-lane continuous patched wraps on a roll.

In general application of decorative and/or communicative means is possible to be executed before the fabrication of the web, during the fabrication of the web, during the labelling operation or after the labelling operation. When decorating the web itself, the method according the present invention allows providing decorative and/or communicative means both on the patches 9 of insulating material and/or on the film 8 of shrinkable material and/or stretchable material.

In one alternative, the thermally insulating patch 9 can be decorated and covered afterwards by a protective film (not shown) which is transparent at least on the area of the patch that is decorated. In another alternative, the protective film is used as the support for the decorative and communicative means. For this purpose, the decorating of the protective film is ideally carried out on the backside i.e. the side meant to be oriented towards the container on application of the label 1. This principle (which necessitates the use of a transparent protective film) is called mirror-printing whereby the transparent film itself is protecting the ink-layer underneath.

Printing on the opposite side of the protective film is possible as well but however makes the printing layer more susceptible to scuffing (damage of the printing). This phenomenon can be partly solved by covering the ink with a protective varnish layer.

It is noted that the above protective film can either be the film 8 of shrinkable material and or stretchable material, or can be an additional film provided on the web 7.

In another embodiment, the film can be partly or completely metallised, opposed to the traditional decorating or printing principle. In addition, special inks like thermochromic inks can advantageously be used as additional feature.

Alternative method for manufacturing the single-lane web

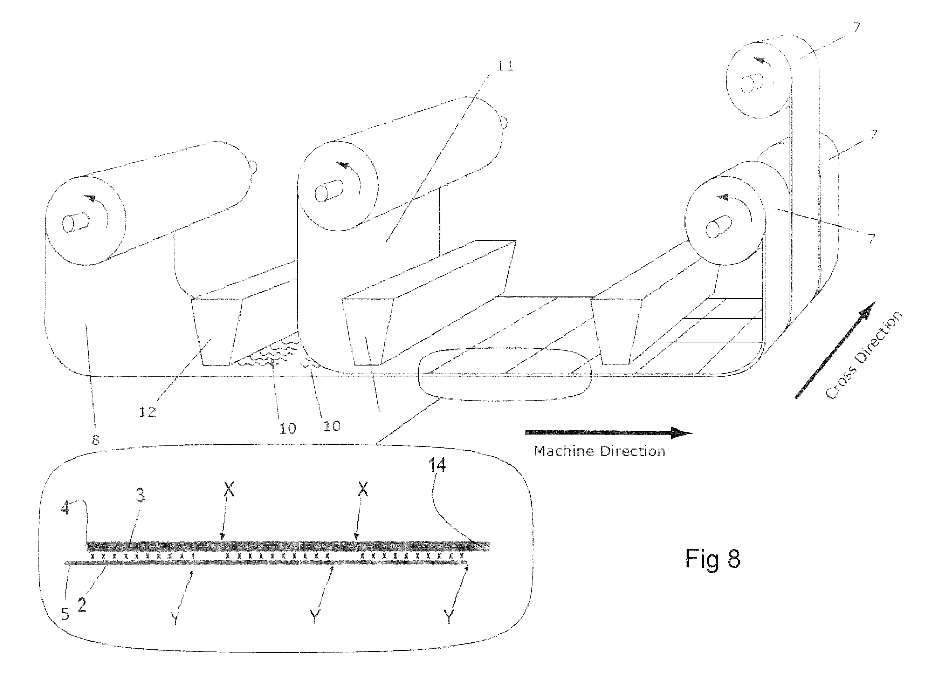

Figure 8 represents an alternative method for manufacturing a single-lane web 7, whereby the method comprises:
- step 1c: providing a continuous film 8 of shrinkable material and or stretchable material;
- step 2c: partial application of an adhesive thereon in a predetermined pattern, i.e. on areas with the same contours as the one of the patches 9 of thermally insulating material to be provided on the film 8, except for a part thereof adjacent to the area corresponding to a transversal edge of the insulating patches 9;
- step 3c: providing a continuous film 11 of thermally insulating material and adhering it to the film 8;
- step 4c: kiss-cutting the resulting laminate so that only the film 11 of thermally insulating material is being cut;
- step 5c: optionally stripping away part of the film 11 of thermally insulating material to create lateral strips of the film of surrounding the glue adhered patches 9 to obtain a web of labels;
- step 6c: slitting/rewinding of the web of labels into different single-lane webs 7.

Steps 1c and 2c are generally identical to the steps 1 and 2 of the previously described methods, while in step 3c, the area covered with an adhesive is slightly smaller as to obtain a part of the desired patches of insulating material that is not adhered to the film of shrink material and/or stretch material

In step 4c the continuous layer of insulating material is cut transversally, preferably at the edge of a glued area, such that this continuous layer is divided in discrete patches comprising a strip 14 of non-adhered insulating material.

Step 5c is optional and allows creating one or more of said parallel strips 6. However, omitting step 5c has the advantage that no material is to be stripped during the manufacturing of the continuous single lane web, thereby minimizing manufacturing steps and increasing manufacturing speed.

The single-lane web obtained by the above alternative method can be divided in labels by cutting the continuous film 8 of shrink material and/or stretch material.

A knife can be applied to transversally cut this continuous film 8 along a line Y adjacent to an edge of an area covered with adhesive, opposite an edge X of an adjacent area covered with adhesive along which the film 11 of insulating material has been cut during the manufacturing of the single-lance web 7. This results in a label comprising a layer 2 of shrink material and/or stretch material and a layer 3 of insulating material adhered to each other by an adhesive, whereby both layers are mutually displaced in a longitudinal direction L of the label, resulting in a free strip 5 of shrink material and or stretch material and in a free strip 14 of insulating material at an opposite edge of the label. Clearly, the cutting of the single-lane web in individual labels is preferably performed during a labelling operation, such that the single lane web can easily be stored, transported or handled prior to labelling.

According to a further alternative method for manufacturing a single-lane web, step 1 c to 3c are followed by a step 4d that is identical to step 4c except for the fact that the continuous layer of insulating material is only perforated instead of entirely cut through. This alternative method prevents the creation of free strips 14 of non-adhered insulating material to be formed until dividing the resulting single-lane web in distinct labels, thereby facilitating winding of the single-lane web.

When only perforating the continuous layer of insulating material, the free strips 14 can be created at the moment the single-lane web is divided in distinct labels. This is achieved by cutting the continuous film 8 along a line Y adjacent to an edge of an area covered with adhesive, opposite an edge X of an adjacent area covered with adhesive along which the film 11 of insulating material has been perforated and by breaking the continuous film along the corresponding perforated lines.

When the layer of insulating material is broken along the perforated line X before transversally cutting the continuous film 8, it is also possible to cut both the continuous film 8 and the film of insulating material 11 along a same line. In this last case, a strip of insulating material will be removed from the single-lane web at the moment of creating distinct labels according the present invention.

Clearly the cutting and breaking of the single-lane web in individual labels is preferably performed during a labelling operation, such that the single lane web can easily be stored, transported or handled prior to labelling.

### Method of application of the label onto a container

This invention discloses an advantageous method comprising labelling the container by using a single-lane continuous web, as described in this invention, by applying it in a one-step process. The use of the single-lane continuous web comprises a lot of advantages and/or combination of advantages, compared to prior art insulating labelling material.

Indeed, compared to other prior art thermally insulating packaging materials, the single-lane continuous concept presented in this invention, features some important advantages from a production point of view:
- The efficiency of the labelling operation is significantly improved. From a productivity point of view, it is advantageous to have a system as simple as possible to maximise the efficiency of the labelling line. The integrated one single labelling step is more efficient than the overall efficiency of 2 consecutive labelling steps. This will of course be reflected in the overall production cost.
- Moreover, the potential for integration into a production line is much higher. While the 2-step approach - due to speed limitations - is hardly imaginable to ever carry-out in-line with the container filling and packing process, the likeliness for this to be possible for the new single-lane continuous system is much higher. It is a known fact that the more processes linked consecutively in a production line, the lower its overall efficiency. As an example, if each labelling process step has an efficiency of about 90%, the 2-step process would have an overall efficiency of 81% and the one-step process, developed in this invention, would have an efficiency improved by approximately 11%.

In order to maximise the thermally insulating performance, one should aim to have the thermally insulating part of the label cover the container wall as much as possible in the zones having direct contact with the liquid on the other side of the wall.

The labelling of the container can be accomplished as well on empty as on filled containers, giving from a production point of view a lot of flexibility.

Labelling filled containers can be done in-line or off-line with the filling operation. Off-line with the filling brings extra complexity, especially related to extra logistics, manpower etc. thereby significantly increasing the total production cost. Labelling in-line with the filling operation is theoretically more interesting but induces implicitly a reduction in efficiency of the production line, thereby potentially increasing the total production cost as well.

Assuming the labels according to this invention do resist the filling and the potential pasteurisation process, one could also consider the pre-labelling of the containers prior to filling. Part of the production complexity of the labelling process is thereby shifted to the previous production step and - assuming the pre-labelled containers do pass through the line with similar efficiency as the non-labelled ones - the pre-labelling option is offering the possibility of significant gains in production efficiency during the filling process, thereby potentially keeping the total production cost lower versus the previous options.

There are basically four possible ways for the application of a thermally insulating label on a container. The first one is the so called wrap-around application, which comprises of using the single-lane continuous web 7. This technique comprises wrapping (typically 360°) of a label 1 around the circumference of the container. During the labelling operation, right before application on the container, the single-lane continuous web 7 is thereby cut into individual thermally insulating labels 1. According to the present invention a film 8 of shrinkable material and or stretchable material 8 is included in the continuous web 7 suited for wrap-around application and the labelling operation is followed by shrinking the label such that it fits tightly around the container. Typical suppliers for suitable wrap-around labelling equipment are Krones, KHS, Trine, B&H etc.

The second way of application comprises using the "cut-and-stack" application whereby the single-lane continuous web 7 is already cut into individual labels 1 during or after the manufacturing of the single-lane continuous web 7. Typical suppliers for suitable "cut-and-stack" labelling equipment are Krones, KHS, etc.

The third one is the shrink sleeve application, which comprises vertically dispensing tubular insulated sleeves over the container followed by shrinking. These tubular sleeves have to prepared in accordance with the described method of thermally insulating patch application, whereby a supplementary step of folding and glueing/seaming the material in machine direction is being added. Typical suppliers for suitable shrink sleeve application equipment are ITW, PDC-Europe etc.

The fourth one is stretch sleeve application, which from an application point of view is very similar but requires the base film 8 to be stretchable. By stretching the label right before application, followed by natural relaxation of the material after this application, the label 1 is tightly fitting around the container. Typical suppliers for suitable stretch sleeve application equipment are ITW, PDC-Europe etc.

In any of the methods of application described, it is desired that the opposed edges of the insulating layer 2 do not overlap each other when fitted tightly around the container, while the transversal strip 5 of the label 1 overlaps the opposite edge of the label 1 and is adhered thereto.

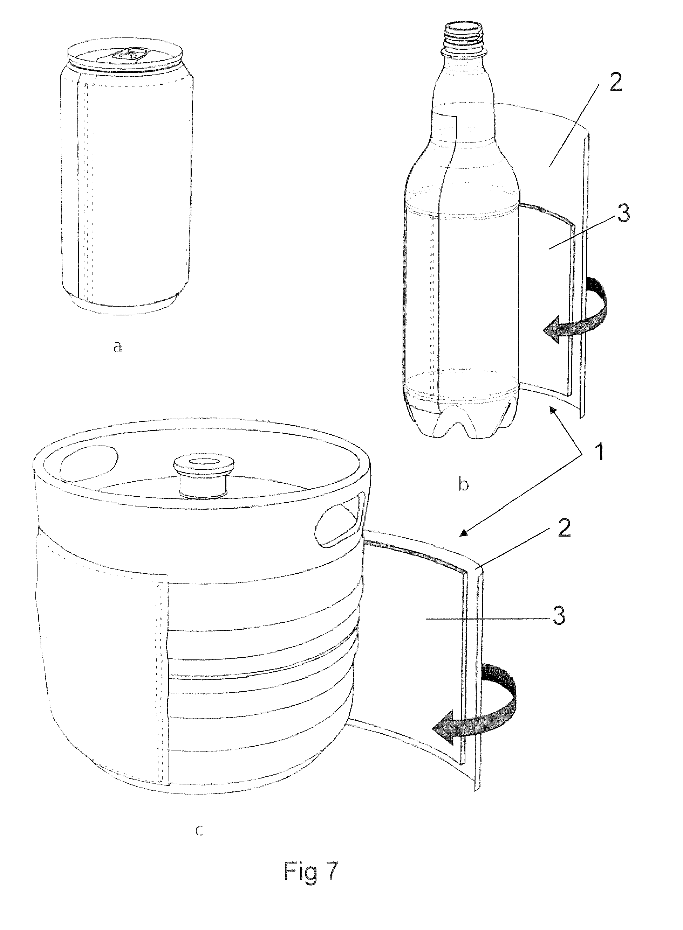

In accordance with the present invention the container to be labelled can be any suitable container which is appropriate to contain solid or liquid ingredients, which can be food or non-food ingredients. Such ingredients can be packaged in containers such as cans (Figure 7.a), bottles (e.g. plastic and glass)(Figure 7.b), cartons, pouches and kegs (Figure 7.c). When it is referred to liquid food ingredients, it means any kind of beverages including carbonated beverages such as beer.

In this invention, the developed system allows the pasteurization of the packaged products. When appropriately applied to the container, the developed method according the invention provides water-tight properties to the thermally insulating patch. Its thermally insulating properties however are also maintained when the thermally insulating patch is in direct contact with water, which is not always the case when the thermally insulating material is a fibrefill batt.

While a fibrefill batt can be easily penetrated by humidity, thereby decreasing significantly the insulating properties of the material, the system presented in this invention works with alternatively structured materials such as closed-cell PE-foam or similar. Assuming there can be some penetration of moisture at the edges of the fibrefill batt, one can state that prior art thermally insulating label systems are not suitable to resist to the pasteurisation treatment necessary for its content under all conditions. To prevent penetration of moisture the labels 1 can be provided with the above mentioned lateral strip 6 of the shrink layer and/or stretch layer 2 exceeding the insulating layer 3, this strip 6 will seal the corresponding edges of the insulating layer 3 after application of the label 1 on a container, such that the insulating layer 3 is completely protected against ingress of moisture.

Contrary to fiberfill batt, closed cell material does not absorb humidity and is therefore much more resistant to and appropriate for the pasteurisation conditions.
A typical pasteurization treatment is the exposure of the product to a temperature between 60°C and 90°C for a period of time ranging between 1 minute and 60 minutes.

### Alternative embodiment of a label according the present invention

One of the problems associated to thermal insulation of containers consists of the perception by the consumer who cannot objectively nor physically appraise the current temperature of the inside liquid anymore and estimate whether the container has been sufficiently cooled or not. Besides this, there is the psychological issue that - when relying on the temperature appraisal of the outside container which will always be higher due to the thermal insulation - the consumer will tend to have the impression that the liquid can never be cool enough for his purpose and consequently reject or dislike the product.

Both problems can be easily resolved by creating a limited "cold bridge" by modifying the shape of the thermally insulating patch.

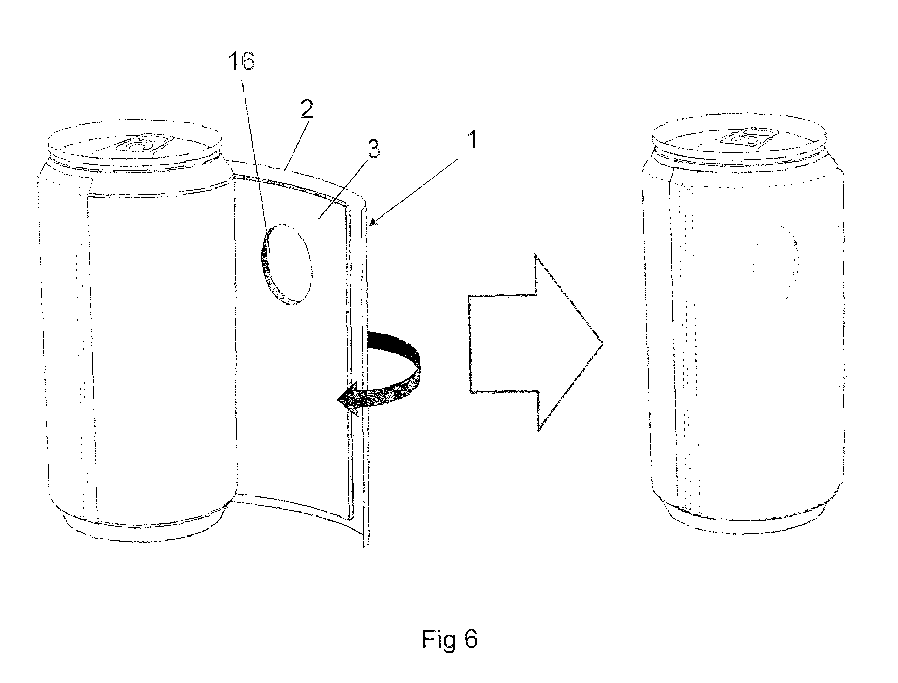

The "cold-bridge" in this invention means a portion of the side wall of the container that is not covered by the thermally insulating material (the patch), in order to provide to the consumer a better perception and an indication of the temperature of the content of the container or the sensation that the content of the container is cool, This "cold-bridge" however, should be limited in size but sufficient allowing to better appraise the actual temperature of the content of the container. An example of the "cold-bridge" principle is schematically represented on a can in Figure 6.

In order to obtain such a cold-bridge it is preferred to provide a cut out portion at the opposite transversal edges of the insulating patch in each label, such that when applying the label onto a container, the cut out portions at both opposite edges are joint to create the cold-bridge. According the above method for manufacturing, the cut-out portion can be created during kiss-cutting of the insulating layer and consecutively stripping away of part of the film 11 of insulating material. Hence, no additional production steps are required to manufacture labels comprising a cold-bridge when applied onto a container.

## Claims

1. An insulating label comprising at least a layer a) of shrinkable and/or stretchable material and a further layer b) of insulating material; the layer a) exceeding at least one of the edges (4) of the layer b) in a longitudinal direction of the label (1), **characterized in that** the layers are mutually bound prior to application of the label (1) on a container.

2. Insulating label according to claim 1, **characterized in that** the shrink layer (2) and/or the stretch layer (2) is situated at the exposable side of the label (1).

3. Insulating label according to claims 1 or 2, **characterized in that** the shrink layer (2) and/or stretch layer (2) exceeds the edges (4) of the insulating layer (3) in a transverse direction of the label.

4. Insulating label according to any of the preceding claims, **characterized in that** the layer (3) of insulating material comprises closed cell foam.

5. Insulating label according to any of the preceding claims, **characterized in that** the insulating material has a thermal conductivity in the range of 0,0015 to 0,25 W/m*K and that the insulating layer (3) has a thickness of at least 0,1 mm.

6. A web comprising a number of labels as defined in any of claims 1-5, further **characterized in that** the shrink layers (2) and/or stretch layers (2) of the different labels (1) form a continuous film.

7. Container having a label (1) as defined in any of claims 1-5 applied around its side wall.

8. Container according to claim 7, **characterized in that** the edges (4) of the layer (3) of insulating material do not overlap each other when applied on the container.

9. Container according to claim 7 or 8, **characterized in that** the insulating layer (3) does not cover the entire side wall of the container.

10. Method for manufacturing a web as defined in claim 6, the method comprising providing a shrink layer (8) or stretch layer (8) ; adhering a layer (11) of thermally insulating material thereon; cutting and/or perforating and/or removing part of the thermally insulating material so as to create discrete patches (9) on the shrink layer or stretch layer.

11. Method according to claim 10, **characterized in that** for adhering the layer (11) of thermally insulating material on the shrink layer (8) and/or stretch layer (8), an adhesive substrate (10) is provided on said shrink layer and/or stretch layer in a predetermined pattern, corresponding to the position of the patches (9) of thermally insulating material to be bound to the shrink layer or stretch layer.

12. Method according to claim 10 or 11, **characterized in that** the removal of part of the insulating material is achieved by kiss-cutting the web (7) so that only the layer of thermally insulating material is cut and by stripping away the non-adhered insulating material.

13. A label, the label comprising at least a layer of stretchable material and a layer of insulating material; the stretch layer exceeds at least one of the edges of the insulating layer in a longitudinal direction of the label; and the stretch layer is situated at the exposable side of the label.
